# EUROPEAN PATENT SPECIFICATION

(11) **EP 0 981 945 B1**
(45) Date of publication and mention of the grant of the patent: **24.07.2002**
(21) Application number: 99306540.8
(22) Date of filing: 19.08.1999
(51) Int. Cl.: A01D 34/68, G05G 1/10

(54) **Safety lock mechanism for a lever switch**
Sicherheitssperrvorrichtung für einen Hebelschalter
Mechanisme de verrouillage de sécurité pour un interrupteur à levier

(30) Priority: 28.08.1998 GB 9818787
(43) Date of publication of application: 01.03.2000
(73) Proprietor: Black & Decker Inc., Newark Delaware 19711 (US)
(72) Inventor: Richards, Gareth, Spennymoor, Co. Durham DL16 6UR (GB)
(74) Representative: Harries, Simon George

(56) References cited:
- EP-A- 0 704 368
- DE-A- 3 827 926
- DE-A- 19 711 899
- US-A- 4 531 347
- US-A- 5 203 147

## Description

The present invention relates to an actuating mechanism and in particular to actuating mechanisms for use with a bowden cable on a lawn mower.

Commercially available types of lawn mower comprise a cutting deck mounted on wheels or rollers. A motor is mounted on the deck of the mower which rotatingly drives a cutting blade mounted beneath the cutting deck about a substantially vertical axis. A handle is attached to the rear of the mower by which an operator is able to manoeuvre the mower. The handle is often in the form of a hollow metal tube which is bent into the appropriate shape to form the handle. The motor can either be an electric motor powered by either a battery or a mains electricity power supply or be a combustion engine.

It is desirable for the operator to be able to control the motor whilst manoeuvring the lawn mower by the handle. Therefore, a control mechanism is commonly provided on the handle which enables the operator to control the motor whilst holding the handle of the mower. Such control mechanisms include a lever box mounted on the handle in close proximity to the location where an operator would grasp the handle.

Such lever boxes are formed from two clam shells which are clamped around the handle. Holes are punched or drilled through the handle through which bolts or screws pass. The bolts or screw secure the two clamp shells to each other and to the handle. The problem with this method of mounting the lever box is that the punching drilling process to form the hole in the handle takes time and expense particularly in view of the fact that the handle is usually made from a metal tube. In addition to slowing the manufacturing process, an additional piece of machinery is required to make the holes.

US 4531347 discloses an actuating mechanism for a lawn mower . US 4531347 forms the closest piece of prior art and comprises the features disclosed in the pre-characterising part of claim 1.

Moreover, the garden implement of the invention includes a handle which is grasped by an operator when in use and which has a curved portion;
an actuating mechanism mounted on the handle and which comprises a housing formed from two clamshells which are clamped together about the curved portion the rate at which a path, along which the curved portion travels through the actuating mechanism, curves is not uniform along its full length so that the clamshells co-operate with the curved portion to retain the actuating mechanism in place on the handle characterised in that transverse ribs are formed within the housing and which form the path and are configured to receive and hold the curved portion of the handle.

By constructing the actuating mechanism in this manner, it obviates the need of using bolts or screws which have to pass through the handle thus avoiding the additional costs incurred and time required by punching and drilling holes through the handle.

Ideally the rate at which the path, along which the curved portion travels through the actuating mechanism, curves is not uniform along its full length. This helps prevent the actuating mechanism from sliding along the handle. By having a variable rate of curvature for the path of the curved portion of the handle through the lever box, the curved portion is only able to locate within the actuating mechanism in one particular position thus fixing the position of the actuating mechanism relative to the handle.

An embodiment of the invention will now be described with reference to the following drawings of which:-
Figure 1 is a side view of a lawn mower;
Figure 2 is a side view of a bowden cable lever box;
Figure 3 is a side view of the bowden cable lever box with the outer clamshell removed when viewed from the opposite side to that of Figure 2;
Figure 4 is a perspective view of the lever according to the first embodiment of the invention;
Figure 5 is a cross-sectional view of the safety lock mechanism in the direction indicated by Arrows A in Figure 3 when the lever and the safety lock button are in their released state;
Figure 6 is a cross-sectional view of the safety lock mechanism in the direction indicated by Arrows A in Figure 3 when the safety lock button has been depressed;
Figure 7 is a cross-sectional view of the safety lock mechanism in the direction indicated by Arrows A in Figure 3 when the safety lock button is depressed and the lever activated; and
Figure 8 is a cross-sectional view of the safety lock mechanism in the direction indicated by Arrows A in Figure 3 when the lever is activated without depression of the safety lock button.

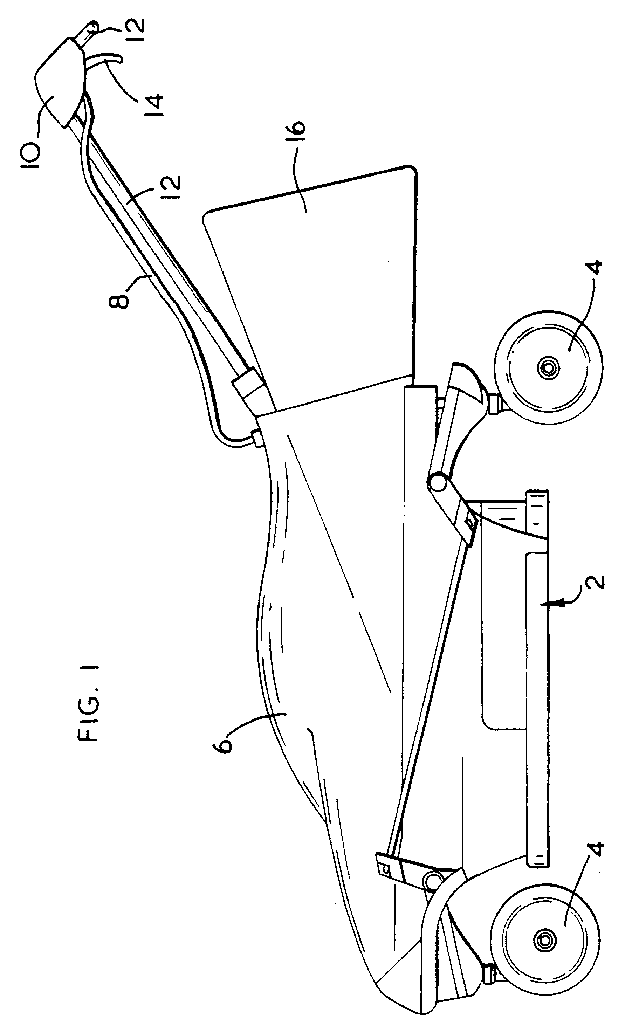

Referring to Figure 1, the lawn mower comprises a cutting deck (2) mounted on four castor wheel assemblies (4). An electric motor (not shown) is mounted on the deck (2) and which rotatingly drives a cutting blade (not shown) mounted on the output spindle of the motor about a substantially vertical axis beneath the cutting deck (2). A battery (not shown) is mounted on the cutting deck which is in electrical connection with the motor via a switch mechanism (not shown) mounted on the motor. The battery powers the motor when the switch mechanism is activated. A hood (6) encloses the battery, motor and switch mechanism. A grass box (16) is attached to the rear of the mower for the collection of the grass cutting generated by the cutting action of the mower. A bowden cable (8) runs from the switch mechanism to a lever box (10) mounted on a handle (12) attached to the rear of the lawn mower. A pivotal lever (14) projects through a hole (30) in the lever box (10). Movement of the cable (18) located within the sleeve (20) of the bowden cable (8) operates the switch mechanism to complete or break the electrical circuit between the battery and motor to switch the mower on or off respectively.

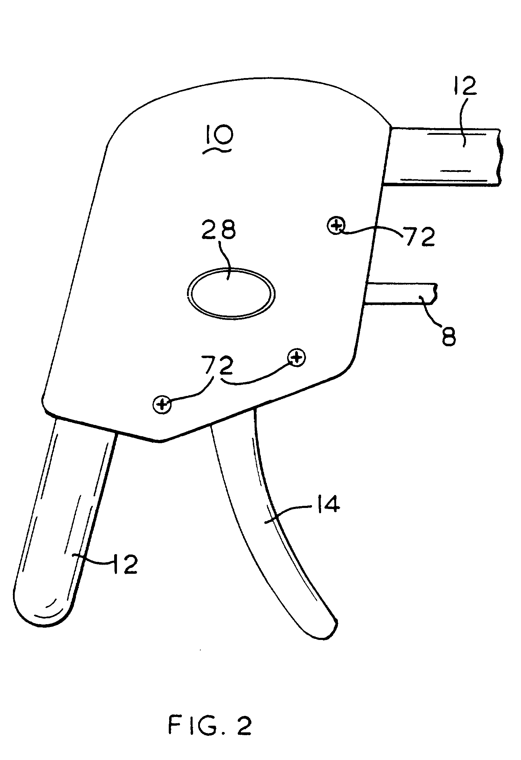

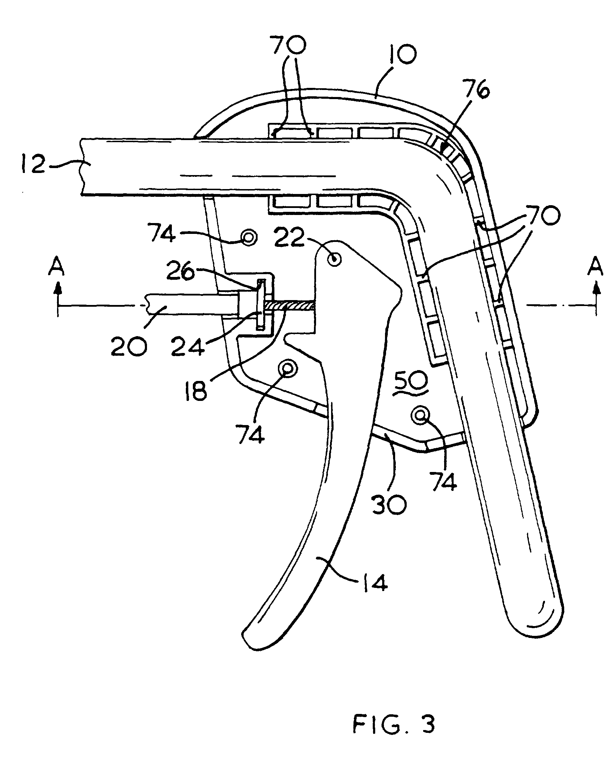

Figures 2 and 3 show the lever box (10) which comprises two plastic clamshells connected together. The rear handle (12), which comprises a hollow metal tube, passes through the lever box (10). A plurality of ribs (70) are integrally formed on the inside of both clamshells and which are shaped to receive and hold the metal tube of the handle when the clamshells are connected together. The rate at which the path formed by the ribs (70) curves is not uniform along its full length, the path initially being straight in a substantially horizontal direction then curving and then straight again in a downward direction as shown in Fig. 3. The two clamshells are attached to each other using three screws (72) (as shown in Figure 2), which screw into three bases (74) (shown in Figure 3). When the lever box is mounted onto the tube, the tube is sandwiched between the two clamshells. The ribs (70) locate the tube within the clamshells and grip the tube. A bend (76) within the tube is located within the ribs of the lever box. The shape of the bend of tube corresponds with that of the path formed by the ribs, the path along which the tube passes through the lever box being defined by the ribs (70). The bend co-operates with the ribs so as to prevent the lever box moving relative to the tube. None of the three screws (72) pass through the hollow metal tube.

The lever (14) pivots about an axis (22). The sleeve (20) of the bowden cable (8) terminates in a circular flange (24) which has a diameter greater than the sleeve (20). The flange slots into a recess (26) formed in the clamshells and holds the flange (24) and sleeve (20) stationary relative to the lever box (10). The cable (18) within the bowden cable (8) is attached to the lever (14) at a point away from its axis (22) of pivot so that pivotal movement of the lever (14) results in a sliding movement of the cable (18) within the sleeve (20). A spring (not shown) is mounted on the switch mechanism attached to the other end of the bowden cable (8) which biases the cable (18) relative to the sleeve (20) so that, at the lever box (10) end of the bowden cable (8), the cable is biased towards being withdrawn into the sleeve (20). A button (28) is located on the side of the lever box (10) which can be depressed into the lever box (10). The button (28) interacts with the connection between the end of the cable (18) and the lever (14).

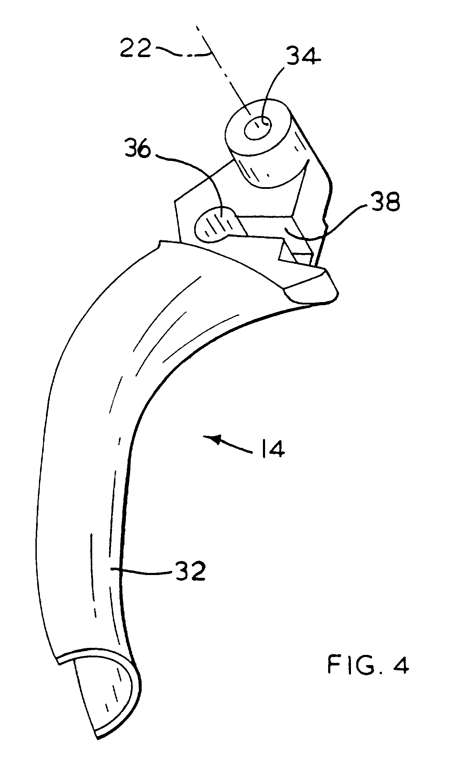

Figure 4 shows a drawing of the lever (14) according to the first embodiment of the invention. The lever (14) comprises a grip section (32) which is located outside of the lever box (10) when assembled and which is gripped, moved and held against the biasing force of the spring by an operator when the lever is activated. A recess (34) having a circular cross-section and which receives a peg integrally formed with the clamshell of the lever box (10) when the lever (14) is mounted within the lever box (10) and about which the lever (14) pivots within the lever box (10). A second recess (36) is formed away from the first recess (34) along the lever which also has a circular cross-section. A slot (38) extends from the second recess (36) to the edge of the lever. The width of the slot (38) is less than the diameter of the cross-section of the second recess (36).

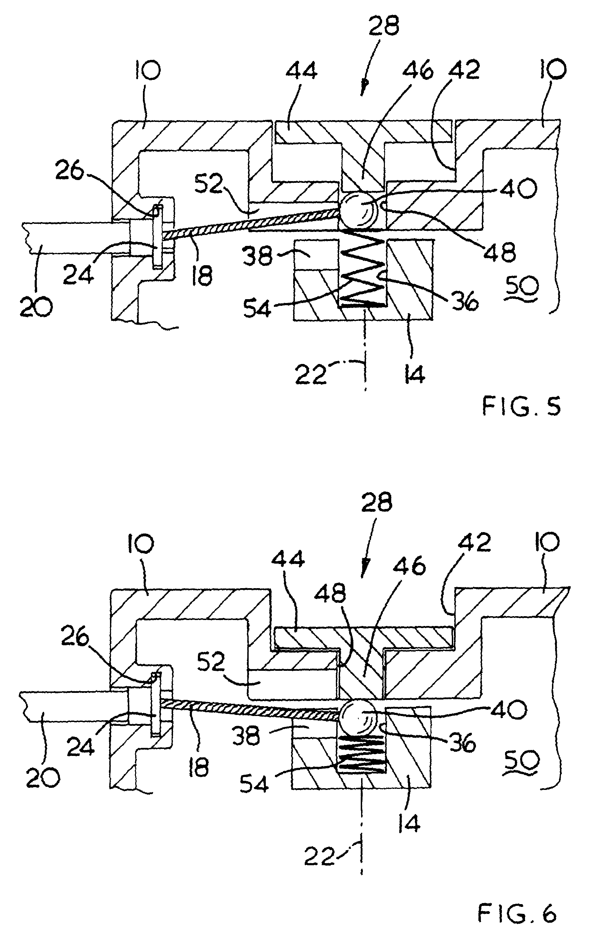

The operation of the safety lock mechanism which comprises a lever according to the first embodiment of the invention will now be described with reference to Figures 5 and 8. The end of the cable (18) terminates in spherical metal ball (40). The diameter of the ball (40) is slightly less than that of the second recess (36) formed in the lever (14) but greater than the width of the slot (38) formed in the lever (14).

The button (28) comprises an oval shaped finger engagement section (44) which is located within a corresponding oval recess (42) formed in the side of the lever box (10). The oval shaped finger engagement section (44) is integrally formed with a peg (46) of circular cross-section. The peg (46) is located in an aperture (48) having a slightly larger circular cross-section than the peg (46) but the same diameter as the second recess (36) formed in the lever (14) and which connects between the recess (42) for the finger engagement section and the inner space (50) formed by the lever box (10). A slot (52) of similar width to the slot (38) formed in the lever (14) extends from the side of the aperture (48). Means (not shown) prevent the button from falling out of the lever box (10).

A spring (not shown) biases the lever to a forward position as shown in Figures 5 and 6.

Figure 5 shows the lever box when neither the lever or the button has been activated by the operator. The lever is in a forward position due to the biasing force of the spring. The second recess (36) is aligned and co-axial with the aperture (48) formed in the wall of the lever box (10). The slot (38) in the lever (14) is also aligned with the slot (52) in the wall of the lever box (10).

The spherical ball (40) can be located in either the second recess (36) of the lever (14) or the aperture (48) in the wall of the lever box (10). The slots (38; 52) formed in the lever (14) and housing are sufficiently narrow to prevent the spherical ball from passing through the slots. The cable (18) attached to the spherical ball (40) is held under tension due to the biasing force of the spring on the switch mechanism mounted on the motor.

A helical spring (54) is located within the second recess (36) of the lever (14) which engages with the bottom of the recess (36) and the spherical ball (40). When the second recess and the aperture (48) are aligned, as shown in Figure 5, the spring (54) biases the spherical ball into the aperture (48) which in turn presses against and biases outwardly the peg (46) of the button (28), pushing the button (28) to its outermost position.

To activate the switch of the mower, the cable (18) has to be pulled out of the sleeve (20) of the bowden cable (8) in the lever box (10). This is achieved by the pivotal movement of the lever (14). However, prior to pivotally moving the lever, the spherical ball (40) has to be moved so that it is engaged with the lever (14).

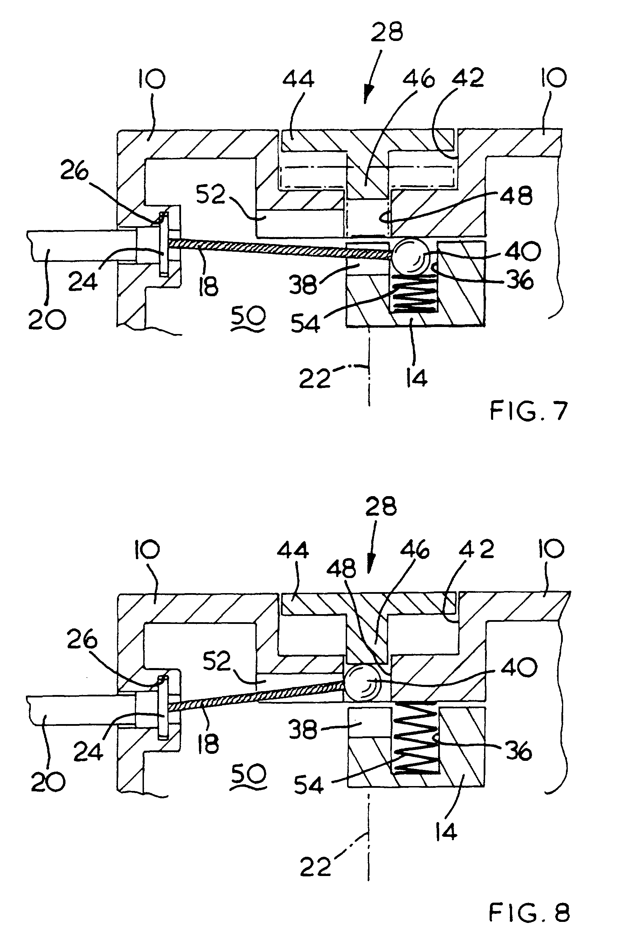

The spherical ball is moved by depression of the button (28) by the operator (as shown in Figure 6). As the button (28) is depressed, the peg (46) pushes the spherical ball from the aperture (48) into the second recess (36) against the biasing force of the spring (54). When the button is fully depressed the end of the peg is aligned with the inner side of the wall of the lever box (10). The lever (14) is then pivoted about its axis of pivot (22). As the lever (14) pivots, the spherical ball (40) is moved away from the sleeve (20) of the bowden cable (8), pulling the cable (18) out of the sleeve (20) against the biasing force of the spring mounted on the switch mechanism (as shown in Figure 7). The spherical ball (40) is prevented from being ejected from the second recess (36) due to the spring (54) by the inner side wall of the lever box (10) which is located in close proximity to the entrance to the recess (36). The button is able to move freely within its mount regardless of the position of the lever as it is no longer subject to the biasing force of the spring (54). As the cable (18) is withdrawn from the sleeve (20) the switch mechanism located on the motor is activated thus activating the mower.

When the lever (14) is pivoted prior to depression of the button (20), the lever (14) moves without the spherical ball (40) which remains in the aperture (48), the spring sliding off the spherical ball (40) and along the surface of the walls of the lever box. Thus, though the lever (14) pivots, the spherical ball and hence the cable (18) remains stationary, the switch mechanism remaining switched off, (as shown in Figure 8). The button (28) is prevented from being depressed due to the spherical ball (40) being blocked from leaving the aperture (48) due to the side of the lever (14) (the slot (38) is too small to receive the spherical ball (40)).

Thus it is clear that the button (28) has to be depressed prior to the pivotal movement of the lever in order to operate the switch mechanism on the mower. However, once the bowden cable is engaged with the lever (14) the button has no effect on the coupling between the lever and the bowden cable.

## Claims

1. A garden implement that includes a handle (12) which is grasped by an operator when in use and which has a curved portion (76);
an actuating mechanism (10) mounted on the handle (12) and which comprises a housing formed from two clamshells which are clamped together about the curved portion (76) the rate at which a path, along which the curved portion (76) travels through the actuating mechanism (10), curves is not uniform along its full length so that the clamshells co-operate with the curved portion to retain the actuating mechanism (10) in place on the handle (12) **characterised in that** transverse ribs (70) are formed within the housing and which form the path and are configured to receive and hold the curved portion (76) of the handle (12).

## Patentansprüche

1. Gartengerät, mit einem Handgriff (12), der bei Gebrauch von einem Benutzer gegriffen wird und der einen gekrümmten Bereich (76) hat;
einem Betätigungsmechanismus (10), der an dem Handgriff (12) montiert ist und der ein Gehäuse aufweist, das aus zwei Gehäuseschalen gebildet ist, die um den gekrümmten Bereich (76) zusammengeklemmt sind, wobei das Ausmaß, mit dem ein Pfad, entlang dessen der gekrümmte Bereich (76) durch den Betätigungsmechanismus (10) verläuft, gekrümmt ist, entlang seiner gesamten Länge nicht gleichmäßig ist, so daß die Gehäuseschalen mit dem gekrümmten Bereich zusammenwirken, um den Betätigungsmechanismus (10) an dem Handgriff (12) in seiner Position zu halten, **dadurch gekennzeichnet, daß** quer verlaufende Rippen (70) in dem Gehäuse ausgebildet sind und einen Pfad bilden und dazu ausgestaltet sind, um den gekrümmten Bereich (76) von dem Handgriff (12) aufzunehmen und zu halten.

## Revendications

1. Outil de jardinage qui comprend une poignée (12) qui est, pendant l'utilisation, agrippée par l'opérateur et qui possède une partie incurvée (76) ;
- un mécanisme d'actionnement (10) monté sur la poignée (12) et qui comprend un logement formé à partir de deux demi-coquilles qui sont serrées ensemble autour de la partie incurvée (76), dont le rayon de courbure, selon lequel la partie incurvée (76) traverse le mécanisme d'actionnement (10), n'est pas uniforme le long de sa longueur totale, de façon à ce que les demi-coquilles coopèrent avec la partie incurvée afin de retenir en place le mécanisme d'actionnement (10) sur la poignée (12), **caractérisé en ce que** des nervures transversales (70) sont formées dans le logement et sont conformées à la poignée (12), en étant configurées pour recevoir et maintenir la partie incurvée (76) de la poignée (12).
